# EUROPEAN PATENT APPLICATION

(11) **EP 4 542 832 A1**
(43) Date of publication of application: **23.04.2025**
(21) Application number: 23845097.7
(22) Date of filing: 06.06.2023
(51) Int. Cl.: H02K 7/116, H02K 7/10, H02K 5/16, H02K 11/20, H02K 11/01

(54) **MID-DRIVE ELECTRIC MOTOR AND ELECTRIC VEHICLE**

(30) Priority: 29.07.2022 CN 202210910243
(71) Applicant: Guangdong Welling Motor Manufacturing Co., Ltd., Foshan, Guangdong 528311 (CN)
(72) Inventor: PENG, Haoyu, Foshan, Guangdong 528311 (CN); LIU, Hailiang, Foshan, Guangdong 528311 (CN); WANG, Hongxiao, Foshan, Guangdong 528311 (CN)
(74) Representative: RGTH
(86) International application number: PCT/CN2023/098620
(87) International publication number: WO 2024/021884

(57) **Abstract**

Provided are a mid-drive motor and an electric vehicle. The mid-drive motor includes: a housing assembly having a first mounting cavity, a second mounting cavity, and a third mounting cavity; a crank transmission mechanism; a motor; and a gear transmission mechanism. The crank transmission mechanism is mounted in the first mounting cavity at one end of the housing assembly, while the motor and the gear transmission mechanism are mounted in the second mounting cavity and the third mounting cavity on two sides of the housing assembly, respectively. In this way, mounting of the entire mid-drive motor is completed, with the crank transmission mechanism, the motor, and the gear transmission mechanism rationally distributed in the housing assembly.

## Description

### CROSS-REFERENCE TO RELATED APPLICATION

This application is based on and claims priority to Chinese patent application No. 202210910243.3 filed on July 29, 2022, the entire content of which is incorporated herein by reference.

### FIELD

The present disclosure relates to the field of electric vehicle manufacturing, and more particularly, to a mid-drive motor and an electric vehicle.

### BACKGROUND

With the development of modern society, an increasing number of people choose green travel, and electric bicycles occupy a large share of green travel market. In the field of electric bicycles, a mid-drive motor is a key component in electric vehicles and electric-assist bikes, directly affecting riding experience of electric bicycles. However, in the related art, the mid-drive motor has a relatively complex structure, leading to higher time and labor costs during assembly, which is not conducive to later repair and maintenance.

### SUMMARY

The present disclosure aims to solve at least one of the technical problems in the related art. To this end, the present disclosure provides a mid-drive motor, which has a simple and fast mounting process, and is capable of reducing a time cost and a labor cost consumed in an assembly process.

In a second aspect, the present disclosure further provides an electric bicycle having the above-described mid-drive motor.

In a first aspect, a mid-drive motor is provided according to an embodiment of the present disclosure. The mid-drive motor comprises: a housing assembly having a first mounting cavity, a second mounting cavity, and a third mounting cavity; a crank transmission mechanism comprising a crankshaft, a first one-way clutch, a torque detection component, and a torque output member, the crankshaft being rotatably connected to the housing assembly, the first one-way clutch comprising an outer ring and an inner ring, the outer ring being sleeved onto and fixed to the crankshaft, the torque detection component comprising a torque sensing sleeve, the torque sensing sleeve being provided with a first connection portion and a second connection portion at two ends of the torque sensing sleeve, the first connection portion being connected to the inner ring, and the torque output member having an end sleeved onto and connected to the second connection portion; a motor connected to the housing assembly; a gear transmission mechanism connected to the housing assembly, the gear transmission mechanism having an output end and an input end, and the input end being connected to a drive shaft of the motor; and a second one-way clutch connecting the output end and the torque output member. The first mounting cavity is located at an end of the housing assembly, the second mounting cavity and the third mounting cavity are located at another end of the housing assembly in a radial direction of the crankshaft. The crank transmission mechanism is located in the first mounting cavity and the crankshaft passes through the first mounting cavity. The second mounting cavity and the third mounting cavity are located at two sides of the housing assembly in an axial direction of the crankshaft. The motor is located in the second mounting cavity. The gear transmission mechanism is located in the third mounting cavity.

The mid-drive motor according to the embodiment in the first aspect of the present disclosure can at least provide the following advantageous effects. During mounting of the mid-drive motor, the outer ring of the first one-way clutch is sleeved onto and fixed to the crankshaft, the first connection portion of the torque sensing sleeve is inserted into and fixed to the inner ring, and then one end of the torque output member is sleeved onto and fixed to the second connection portion of the torque sensing sleeve to obtain the mounted crank transmission mechanism. The entire mounting process is simple and convenient, and connection and transmission relationships among components of the crank transmission mechanism are relatively stable. By mounting the crank transmission mechanism into the first mounting cavity at one end of the housing assembly, and by mounting the motor and gear transmission mechanism into the second mounting cavity and the third mounting cavity at two sides of the housing assembly, mounting of the entire mid-drive motor is completed. Rational distribution of the crank transmission mechanism, the motor, and the gear transmission mechanism in the housing assembly simplifies an internal structure of the mid-drive motor, making the mounting process of the mid-drive motor simple and quick, which greatly reduces a time cost and a labor cost involved during assembly. In addition, during later repair and maintenance of the mid-drive motor, opening the first mounting cavity allows for removal of the crank transmission mechanism for repair and maintenance, opening the second mounting cavity allows for removal of the motor for repair and maintenance, and opening the third mounting cavity allows for removal of the gear transmission mechanism for repair and maintenance.

According to the mid-drive motor according to the embodiment in the first aspect of the present disclosure, the housing assembly comprises a first housing, a second housing, a first end cover, and a second end cover, the first housing being connected to the second housing to form the first mounting cavity, the first housing being connected to the first end cover to form the second mounting cavity, and the second housing being connected to the second end cover to form the third mounting cavity.

According to the mid-drive motor according to the embodiment in the first aspect of the present disclosure, the crankshaft has a shaft shoulder at a side of the crankshaft, and a first bearing is sleeved onto the crankshaft, the first bearing being connected to the housing assembly, the first bearing abutting against an outer sidewall of the shaft shoulder in an axial direction of the crankshaft, and the outer ring being sleeved onto the shaft shoulder and having an end surface abutting against the first bearing.

According to the mid-drive motor according to the embodiment in the first aspect of the present disclosure, the crankshaft has a first engagement groove formed at an outer wall of the crankshaft, the first engagement groove and the shaft shoulder being located at two sides of the first bearing, and a first circlip being disposed in the first engagement groove to limit the first bearing.

According to the mid-drive motor according to the embodiment in the first aspect of the present disclosure, the inner ring has a first inner hole. In an axial direction of the inner ring, a plurality of first guide grooves are formed at an inner wall of the first inner hole and circumferentially arranged at an interval. A first guide bar corresponding to the plurality of first guide groove is arranged at an outer wall of the first connection portion. The first guide bar is inserted in of first guide groove.

According to the mid-drive motor according to the embodiment in the first aspect of the present disclosure, a first washer is disposed between the outer ring and the first connection portion. The first connection portion abuts against the first washer when the first guide bar is inserted in the first guide groove.

According to the mid-drive motor according to the embodiment in the first aspect of the present disclosure, the torque output member has a second inner hole. In an axial direction of the torque output member, a plurality of second guide grooves are formed at an inner wall of the second inner hole and circumferentially arranged at an interval. A second guide bar corresponding to the second guide groove is arranged at an outer wall of the second connection portion, wherein the second guide bar is inserted in the second guide groove.

According to the mid-drive motor according to the embodiment in the first aspect of the present disclosure, in the axial direction of the crankshaft, a second bearing and a third bearing are disposed between the torque output member and the crankshaft and spaced apart from each other, the second bearing and the third bearing being located in the second inner hole.

According to the mid-drive motor according to the embodiment in the first aspect of the present disclosure, a plurality of mounting grooves are formed at an outer circumferential wall of the inner ring and circumferentially arranged at an interval, the outer ring being provided with a plurality of ratchet teeth facing towards the inner ring, the plurality of ratchet teeth having an engagement surface. A pawl being disposed in the plurality of mounting grooves and being rotatably connected to the inner ring, the pawl comprising a first pawl and a second pawl, each of the first pawl and the second pawl being connected to an elastic element, and the elastic element being configured to push the first pawl and the second pawl to expand outwardly. When the inner ring rotates in a first direction, one of the first pawl and the second pawl abuts against the engagement surface, and a gap is formed between the other of the first pawl and the second pawl and the engagement surface. When the inner ring rotates in a second direction, each of the first pawl and the second pawl is slidably connected to ratchet teeth.

According to the mid-drive motor according to the embodiment in the first aspect of the present disclosure, three first pawls and three second pawls are provided, the three first pawls being alternatively arranged with the three second pawls in a circumferential direction of the inner ring.

According to the mid-drive motor according to the embodiment in the first aspect of the present disclosure, the torque detection component further comprises a torque sensor and a shielding cover, the shielding cover being sleeved onto an outer periphery of the torque sensing sleeve, and the torque sensor being disposed between the torque sensing sleeve and the shielding cover.

In a second aspect, an electric vehicle is provided according to an embodiment of the present disclosure. The electric vehicle comprises the mid-drive motor according to the embodiments in the first aspect of the present disclosure, and has all the advantageous effects of the first embodiment of the present disclosure.

Additional aspects and advantages of the present disclosure will be provided at least in part in the following description, or will become apparent at least in part from the following description, or can be learned from practicing of the present disclosure.

### BRIEF DESCRIPTION OF THE DRAWINGS

Additional aspects and advantages of the present disclosure will become more apparent and more understandable from the following description of embodiments taken in conjunction with the accompanying drawings.
FIG. 1 is a schematic view of a mid-drive motor according to an embodiment in a first aspect of the present disclosure.
FIG. 2 is a cross-sectional view of a mid-drive motor taken along line A-A illustrated in FIG. 1.
FIG. 3 is an entire schematic view of a crank transmission mechanism according to an embodiment in a first aspect of the present disclosure.
FIG. 4 is an exploded schematic view of a crank transmission mechanism according to an embodiment in a first aspect of the present disclosure.
FIG. 5 is a cross-sectional view of a mid-drive motor taken along line B-B illustrated in FIG. 3.
FIG. 6 is a cross-sectional view of a mid-drive motor taken along line C-C illustrated in FIG. 5.
FIG. 7 is a cross-sectional view of a first one-way clutch of a mid-drive motor according to an embodiment in a first aspect of the present disclosure.
FIG. 8 is an exploded schematic view of a first one-way clutch of a mid-drive motor according to an embodiment in a first aspect of the present disclosure.

Reference numerals of the accompanying drawings:
housing assembly 100; first housing 110; second housing 120; first end cover 130; second end cover 140; first mounting cavity 150; second mounting cavity 160; third mounting cavity 170;
crank transmission mechanism 200; crankshaft 210; shaft shoulder 211; first engagement groove 212; first circlip 213; first one-way clutch 220; inner ring 221; outer ring 222; first washer 223; mounting groove 224; ratchet tooth 225; elastic element 226; first pawl 227; second pawl 228; torque detection component 230; torque sensing sleeve 231; first connection portion 2311; second connection portion 2312; torque sensor 232; shielding cover 233; torque output member 240; first bearing 250; second bearing 260; third bearing 270;
motor 300; drive shaft 310;
gear transmission mechanism 400;
second one-way clutch 500.

### DETAILED DESCRIPTION OF THE EMBODIMENTS

Embodiments of the present disclosure will be described in detail below with reference to examples thereof as illustrated in the accompanying drawings, throughout which same or similar elements, or elements having same or similar functions, are denoted by same or similar reference numerals. The embodiments described below with reference to the drawings are illustrative only, and are intended to explain, rather than limiting, the embodiments of the present disclosure.

In the description of the present disclosure, it should be understood that the orientation or position relationship indicated by description related to orientations such as upper, lower, front, rear, left, and right is based on the orientation or position relationship shown in the drawings, and is only for the convenience of describing the present disclosure and simplifying the description, rather than indicating or implying that the pointed device or element must have a specific orientation, or be constructed and operated in a specific orientation, and therefore cannot be understood as a limitation on the present disclosure.

In the description of the present disclosure, description associated with first and second is used only for the purpose of distinguishing technical features and cannot be understood as indicating or implying relative importance or implicitly indicating the number of indicated technical features or implicitly specifying a sequence of the indicated technical features.

In the description of the present disclosure, unless otherwise clearly limited, terms such as dispose, mount, connect and the like should be understood in a broad sense. For those skilled in the art, the specific meaning of the above-mentioned terms in the present disclosure can be understood properly according to specific contents of technical solutions.

An electric bicycle is a new type of two-wheeled vehicle and falls under a category of bicycles. The electric bicycle uses a battery as an auxiliary power source and is equipped with a motor and a power-assist system. The electric bicycle allows for both human-powered pedaling and motor-assisted propulsion in an integrated manner. As modern society develops, more and more people are choosing green modes of transportation, and electric bicycles have come to occupy a significant share of a green travel market. In the field of electric bicycles, motor placement primarily falls into two categories: one is mid-drive, where the motor is mounted at a center of a car body, e.g., at a bottom bracket, and is referred to as a mid-drive motor. Another type is a hub motor, which is mounted in a hub of the bicycle. Compared with the hub motor, the mid-drive motor has great advantages in terms of technology and performance. For example, benefits of mid-drive motors include maintaining better weight balance between a front and a rear of the bike, not affecting operation of a suspension, and experiencing less road impact. A high level of integration can also reduce exposure of unnecessary cables. The bikes with mid-drive motors offer superior off-road handling, stability, and terrain clearance compared to bikes equipped with hub motors.

Therefore, many electric bicycles use the mid-drive motor, which is a key component on electric bicycles and directly affects riding experience of electric bicycles. However, in the related art, the mid-drive motor has a relatively complex structure, and consumes a high time cost and a high labor cost during assembly, which is not conducive to later repair and maintenance.

To solve this problem, an embodiment in a first aspect of the present disclosure provides a mid-drive motor, in which an outer ring 222 of a first one-way clutch 220 is sleeved onto and fixed to a crankshaft 210, then a first connection portion 2311 of a torque sensing sleeve 231 is inserted and fixed in an inner ring 221, and then one end of a torque output member 240 is sleeved onto and connected to a second connection portion 2312 of the torque sensing sleeve 231 to obtain a mounted crank transmission mechanism 200, resulting in a simple and convenient mounting process. In addition, a first mounting cavity 150, a second mounting cavity 160, and a third mounting cavity 170 are defined in a housing assembly 100, the crank transmission mechanism 200 is mounted in the first mounting cavity 150 at one end of the housing assembly 100, and the motor 300 and the gear transmission mechanism 400 are mounted into the second mounting cavity 160 and the third mounting cavity 170 at two sides of the housing assembly 100. Rational distribution of the crank transmission mechanism 200, the motor 300, and the gear transmission mechanism 400 in the housing assembly 100 simplifies an internal structure of the mid-drive motor, which greatly reduces a time cost and a labor cost involved during assembly. Further, during later repair and maintenance of the mid-drive motor, opening the first mounting cavity 150 allows for removal of the crank transmission mechanism 200 for repair and maintenance, opening the second mounting cavity 160 allows for removal of the motor 300 for repair and maintenance, and opening the third mounting cavity 170 allows for removal of the gear transmission mechanism 400 for repair and maintenance. Each component can be disassembled conveniently and quickly, facilitating the repair and maintenance of the mid-drive motor. Specific structure and function of the mid-drive motor in the first aspect of the present disclosure is further described below with reference to the accompanying drawings and text.

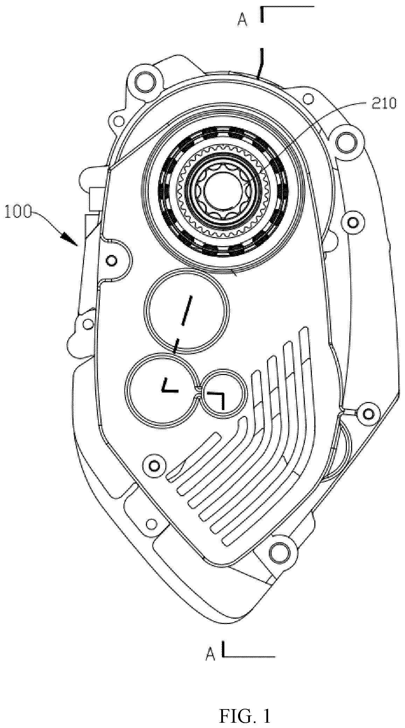

As illustrated in FIG. 1 to FIG. 6, a mid-drive motor is provided according to an embodiment in a first aspect of the present disclosure. The mid-drive motor comprises: a housing assembly 100, a crank transmission mechanism 200, a motor 300, and a gear transmission mechanism 400. The housing assembly 100 has a first mounting cavity 150, a second mounting cavity 160, and a third mounting cavity 170. The crank transmission mechanism 200 is connected to the housing assembly 100 and comprises a crankshaft 210, a first one-way clutch 220, a torque detection component 230, and a torque output member 240. The crankshaft 210 is rotational and connected to the housing assembly 100. The first one-way clutch 220 comprises an outer ring 222 and an inner ring 221. The outer ring 222 has a sleeve portion and the sleeve portion of the outer ring 222 is sleeved onto and fixed to the crankshaft 210. A sufficient spacing is formed between the inner ring 221 and the crankshaft 210 to facilitate connection between the inner ring 221 and the first connection portion 2311. The torque detection component 230 comprises a torque sensing sleeve 231. The torque sensing sleeve 231 is provided with a first connection portion 2311 and a second connection portion 2312 at two ends of the torque sensing sleeve 231. The first connection portion 2311 is inserted in and fixed to the inner ring 221. The torque output member 240 has an end sleeved onto and connected to the second connection portion 2312. The motor 300 is connected to the housing assembly 100. The gear transmission mechanism 400 is connected to the housing assembly 100. The gear transmission mechanism 400 has an output end and an input end, and the input end of the gear transmission mechanism 400 is connected to a drive shaft 310 of the motor 300. A second one-way clutch 500 is connected to the output end of the gear transmission mechanism 400 and the torque output member 240 to realize unidirectional power transmission. The first mounting cavity 150 is located at an end of the housing assembly 100. The crank transmission mechanism 200 is located in the first mounting cavity 150 and the crankshaft 210 passes through the first mounting cavity 150. The second mounting cavity 160 and the third mounting cavity 170 are located at another end of the housing assembly 100 in a radial direction of the crankshaft 210. The second mounting cavity 160 and the third mounting cavity 170 are located at two sides of the housing assembly 100 in an axial direction of the crankshaft 210. The motor 300 is located in the second mounting cavity 160. The gearing transmission mechanism 400 is located in the third mounting cavity 170.

For the mid-drive motor according to the embodiment in the first aspect of the present disclosure, during mounting of the mid-drive motor, the outer ring 222 of the first one-way clutch 220 is sleeved onto and fixed to the crankshaft 210, the first connection portion 2311 of the torque sensing sleeve 231 is inserted into and fixed to the inner ring 221, and then one end of the torque output member 240 is sleeved onto and fixed to the second connection portion 2312 of the torque sensing sleeve 231 to obtain the mounted crank transmission mechanism 200. The entire mounting process of the crank transmission mechanism 200 is simple and convenient. In addition, the torque input from the crankshaft 210 is transmitted through the first one-way clutch 220 to the torque sensing sleeve 231, and then to the torque output member 240. Connection and transmission relationships among the components of the crank transmission mechanism 200 are relatively stable. By mounting the crank transmission mechanism 200 into the first mounting cavity 150 at one end of the housing assembly 100, and by mounting the motor 300 and gear transmission mechanism 400 into the second mounting cavity 160 and the third mounting cavity 170 at two sides of the housing assembly 100, mounting of the entire mid-drive motor is completed. After assembly, the motor 300 and the first one-way clutch 220 of the mid-drive motor are located at a side of the housing assembly 100, while the gear transmission mechanism 400 and the torque output member 240 are located at another side of the housing assembly 100. The crank transmission mechanism 200, the motor 300, and the gear transmission mechanism 400 are rationally distributed in different positions in the housing assembly 100. Rational distribution of the crank transmission mechanism 200, the motor 300, and the gear transmission mechanism 400 in the housing assembly 100 simplifies an internal structure and mounting of the mid-drive motor, which greatly reduces the time cost and the labor cost involved during assembly. In addition, during later repair and maintenance of the mid-drive motor, opening the first mounting cavity 150 allows for removal of the crank transmission mechanism 200 for repair and maintenance, opening the second mounting cavity 160 allows for removal of the motor 300 for repair and maintenance, and opening the third mounting cavity 170 allows for removal of the gear transmission mechanism 400 for repair and maintenance. Each component in the mid-drive motor can be disassembled conveniently and quickly, facilitating the repair and maintenance for components in the mid-drive motor.

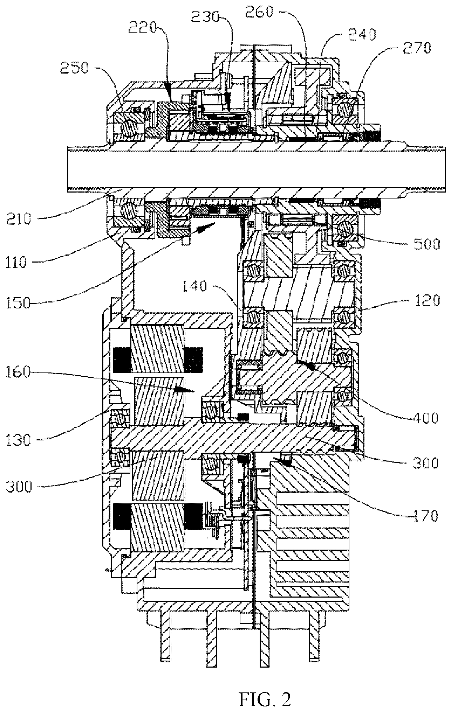

As illustrated in FIG. 2, it should be understood that the housing assembly 100 comprises a first housing 110, a second housing 120, a first end cover 130, and a second end cover 140. The first housing 110 is removably connected to the second housing 120. The first mounting cavity 150 is defined between the first housing 110 and the second housing 120. The first housing 110 is removably connected to the first end cover 130. The second mounting cavity 160 is defined between the first housing 110 and the first end cover 130. The second housing 120 is removably connected to the second end cover 140. The third mounting cavity 170 is defined between the second housing 120 and the second end cover 140. The crank transmission mechanism 200 is located in the first mounting cavity 150, and the crankshaft 210 passes through the first mounting cavity 150. The motor 300 is located in the second mounting cavity 160. The gear transmission mechanism 400 is located in the third mounting cavity 170. The drive shaft 310 of the motor 300 penetrates the first housing 110 and the second end cover 140 to be connected to the gear transmission mechanism 400. In the later repair and maintenance process of the mid-drive motor, the crank transmission mechanism can be taken out for repair and maintenance by disassembling the first housing 110 and the second housing 120, the motor can be taken out for repair and maintenance by disassembling the first end cover, and the gear transmission mechanism 400 can be taken out for repair and maintenance by disassembling the second housing 120. Each component can be disassembled conveniently and quickly, facilitating the repair and maintenance for components in the mid-drive motor.

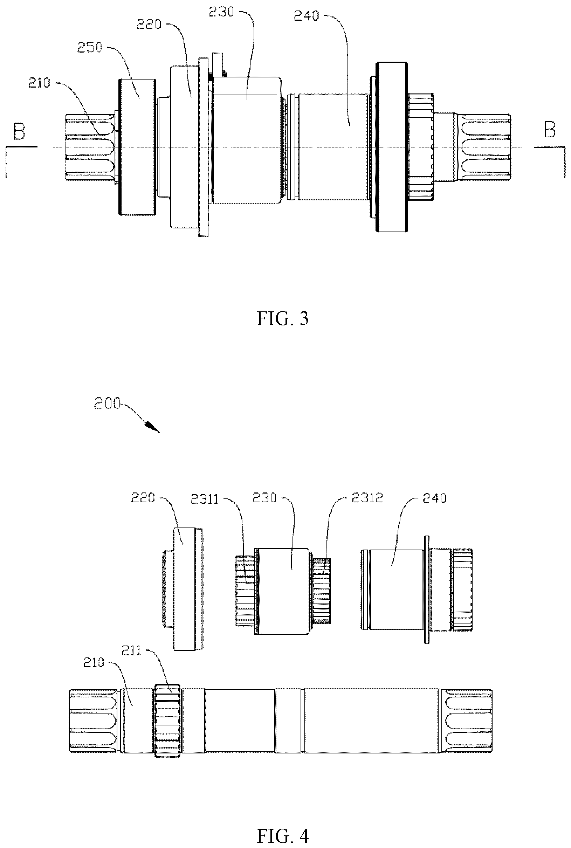

As illustrated in FIG. 3 to FIG. 5, it should be understood that the crankshaft 210 has a shaft shoulder 211 at a side of the crankshaft 210. A first bearing 250 is sleeved onto the crankshaft 210. The first bearing 250 is used to connect the crankshaft 210 to the housing assembly 100 to provide support for the crankshaft 210. The first bearing 250 is fixed at the crankshaft 210 via an interference fit. The first bearing 250 abuts against an outer side of the shaft shoulder 211 in an axial direction of the crankshaft 210. The outer ring 222 is sleeved onto the shaft shoulder 211 and has an end surface abutting against a side wall of the first bearing 250. The inner ring 221 is sleeved onto the first connection portion 2311. One end of the torque output member 240 is sleeved onto the second connection portion 2312. In an assembly process of the crank transmission mechanism 200, the first bearing 250 serves to provide axial positioning. First, the first bearing 250 is sleeved onto a side of the crankshaft 210, and a wall surface of the first bearing 250 abuts against the shaft shoulder 211. Then, the outer ring 222 is sleeved onto the shaft shoulder 211, and the first connection portion 2311 of the torque sensing sleeve 231 is inserted and fixed into the inner ring 221. Finally, one end of the torque output member 240 is sleeved onto and fixed to the second connection portion 2312 of the torque sensing sleeve 231. The entire assembly process is simple and convenient, effectively reducing the time cost and the labor cost involved in the mounting process.

It should be noted that the outer ring 222 is connected to the shaft shoulder 211 by a spline. When the outer ring 222 is sleeved onto the shaft shoulder 211 at a side of the crankshaft 210, an opening of the outer ring 222 faces towards another side of the crankshaft 210, facilitating connection between the first connection portion 2311 of the torque sensing sleeve 231 and the inner ring 221.

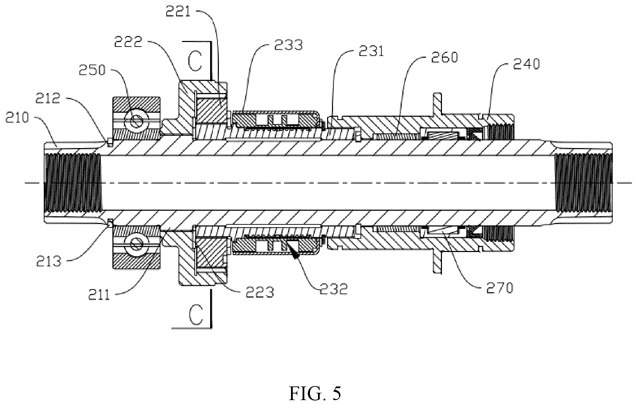

As illustrated in FIG. 4 and FIG. 5, it should be understood that the outer wall of the crankshaft 210 is recessed to form a first annular engagement groove 212. In the axial direction of the crankshaft 210, the first engagement groove 212 and the shaft shoulder 211 are located at two sides of the first bearing 250. A first circlip 213 is disposed in the first engagement groove 212, which limits the first bearing 250 on the crankshaft 210. The first circlip 213 serves to axially fix the first bearing 250. In the assembly process of the crank transmission mechanism 200, the first bearing 250 is mounted at a side of the crankshaft 210 to enable the first bearing 250 to abut against the shaft shoulder 211. The first circlip 213 is mounted into the first engagement groove 212, which serves to axially fix the first bearing 250. Then, the outer ring 222 is sleeved onto the shaft shoulder 211. The first connection portion 2311 of the torque sensing sleeve 231 is then inserted and fixed into the inner ring 221. Finally, one end of the torque output member 240 is sleeved onto and fixed to the second connection portion 2312 of the torque sensing sleeve 231. The entire assembly process is simple and convenient, effectively reducing the time cost and the labor cost involved in the mounting process.

According to the embodiments in the first aspect of the present disclosure, the inner ring 221 has a first inner hole. In an axial direction of the inner ring 221, a plurality of first guide grooves (not illustrated) are formed at an inner wall of the first inner hole and circumferentially arranged at intervals. First guide bars corresponding to the plurality of first guide grooves are arranged at an outer wall of the first connection portion 2311. The first guide bars at the outer wall of the first connection portion 2311 are inserted in the plurality of first guide grooves at the first inner hole to enable axial transmission connection between the inner ring 221 and the torque sensing sleeve 231. In the assembly process of the crank transmission mechanism 200, the first bearing 250 is sleeved onto a side of the crankshaft 210 to allow the first bearing 250 to abut against the shaft shoulder 211. The first circlip 213 is then mounted into the first engagement groove 212, which axially fixes the first bearing 250. Subsequently, the outer ring 222 is sleeved onto the shaft shoulder 211. The first guide bars at the first connection portion 2311 of the torque sensing sleeve 231 are aligned with the first guide grooves at the first inner hole, and then the first guide bars are inserted into the first guide grooves to enable transmission connection between the inner ring 221 and the torque sensing sleeve 231. The assembly process is simple and convenient. Finally, one end of the torque output member 240 is sleeved onto and fixed to the second connection portion 2312 of the torque sensing sleeve 231, completing mounting of the crank transmission mechanism 200.

It should be noted that in the axial direction of the crankshaft 210, a plurality of first guide bars are arranged at intervals in the circumferential direction at an inner wall of the first inner hole, and first guide grooves (not illustrated) corresponding to the plurality of first guide bars are arranged at the outer wall of the first connection portion 2311, which similarly enables the transmission connection between the inner ring 221 and the torque sensing sleeve 231.

It should be noted that, as illustrated in FIG. 5, the first connection portion 2311 of the torque sensing sleeve 231 has a second engagement groove. A second circlip is disposed in the second engagement groove. The second circlip provides axially positioning for the inner ring 221. When the first guide bar at the outer wall of the first connection portion 2311 is inserted into the first guide groove at the first inner hole, the second circlip abuts against the inner ring 221 to achieve axial positioning for the inner ring 221.

As illustrated in FIG. 4 and FIG. 5, it should be understood that a first washer 223 is disposed between the outer ring 222 and the first connection portion 2311. In the axial direction of the crankshaft 210, the outer ring 222 has a recess at an inner wall of the outer ring 222. The first washer is mounted in the recess. An end surface of the first connection portion 2311 abuts against the first washer 223 when the first guide bars are inserted in the first guide grooves. The first washer 223 provides axial positioning for the torque sensing sleeve 231 and separates the outer ring 222 from the torque sensing sleeve 231. In this way, the end surface of the first connection portion 2311 of the torque sensing sleeve 231 does not come into direct contact with the outer ring 222, which effectively prevents excessive wear between the outer ring 222 and the first connection portion 2311 of the torque sensing sleeve 231 during transmission.

It should be noted that, during the assembly of the crank transmission mechanism 200, the first bearing 250 is sleeved onto one side of the crankshaft 210 to allow the first bearing 250 to abut against the shaft shoulder 211. The first circlip 213 is mounted in the first engagement groove 212. The first circlip 213 provides axially fixation for the first bearing 250. Then, the outer ring 222 is sleeved onto the shaft shoulder 211, the first washer 223 is mounted into the recess at the inner wall of the outer ring 222, the first guide bar at the first connection portion 2311 of the torque sensing sleeve 231 is aligned with the first guide groove at the first inner hole, and then the first guide bar is inserted into the first guide groove. In this way, the transmission connection between the inner ring 221 and the torque sensing sleeve 231 can be realized and a simple and convenient mounting process can be obtained. Finally, one end of the torque output member 240 is sleeved onto and fixed to the second connection portion 2312 of the torque sensing sleeve 231, and thus the mounting of the crank transmission mechanism 200 is completed.

As illustrated in FIG. 4 and FIG. 5, it should be understood that the torque output member 240 has a second inner hole. In an axial direction of the torque output member 240, a plurality of second guide grooves (not illustrated) are formed at an inner wall of the second inner hole and circumferentially arranged at intervals. Second guide bars corresponding to the second guide grooves are arranged at an outer wall of the second connection portion 2312. The second guide bars are inserted in the second guide grooves to enable transmission connection between the torque sensing sleeve 231 and the torque output member 240. In the assembly process of the crank transmission mechanism 200, the first bearing 250 is sleeved onto a side of the crankshaft 210 to allow the first bearing 250 to abut against the shaft shoulder 211. The first circlip 213 is then mounted into the first engagement groove 212, which axially fixes the first bearing 250. Subsequently, the outer ring 222 is sleeved onto the shaft shoulder 211. The first guide bars at the first connection portion 2311 of the torque sensing sleeve 231 are aligned with the first guide grooves at the first inner hole, and then the first guide bars are inserted into the first guide grooves to enable transmission connection between the inner ring 221 and the torque sensing sleeve 231. Then, the second guide grooves at the second inner hole of the torque output member 240 are aligned with the second guide bars at the second connection portion 2312 and the second guide bars are inserted into the second guide grooves, achieving the transmission connection between the torque sensing sleeve 231 and the torque output member 240. The entire assembly process of the crank transmission mechanism 200 is simple and convenient, effectively reducing the time cost and the labor cost involved in the mounting process.

It should be noted that in the axial direction of the crankshaft 210, a plurality of second guide bars are arranged at intervals in the circumferential direction at an inner wall of the second inner hole, and second guide grooves (not illustrated) corresponding to the plurality of first guide bars are arranged at the outer wall of the second connection portion 2312, which similarly enables the transmission connection between the torque sensing sleeve 231 and the torque output member 240.

It should be noted that a third circlip is disposed between the torque sensing sleeve 231 and the torque output member 240. The crankshaft 210 has a third engagement groove for mounting the third circlip, which serves to axially position the torque sensing sleeve 231. In the assembly process of the crank transmission mechanism 200, the first bearing 250 is sleeved onto one side of the crankshaft 210 to allow the first bearing 250 to abut against the shaft shoulder 211. The first circlip 213 is mounted into the first engagement groove 212, which axially fixes the first bearing 250. Subsequently, the outer ring 222 is sleeved onto the shaft shoulder 211. The first guide bars at the first connection portion 2311 of the torque sensing sleeve 231 are aligned with the first guide grooves at the first inner hole, and then the first guide bars are inserted into the first guide grooves, achieving the transmission connection between the inner ring 221 and the torque sensing sleeve 231. Then, the third circlip is mounted into the third engagement groove to achieve axial positioning of the torque sensing sleeve 231. Further, the second guide grooves at the second inner hole of the torque output member 240 are aligned with the second guide bars at the second connection portion 2312 and the second guide bars are inserted into the second guide grooves, achieving the transmission connection between the torque sensing sleeve 231 and the torque output member 240.

As illustrated in FIG. 4 and FIG. 5, it should be understood that along the axial direction of the crankshaft 210, a second bearing 260 and a third bearing 270 are spaced apart from each other and disposed between the torque output member 240 and the crankshaft 210. The second bearing 260 and the third bearing 270 are fixed in the first inner hole by the interference fit with the inner wall of the second inner hole. The second bearing 260 and the third bearing 270 are in a clearance fit with the crankshaft 210, and serve to support the torque output member 240 and the crankshaft 210. During the assembly of the crank transmission mechanism 200, the first bearing 250 provides axial positioning. First, the first bearing 250 is sleeved onto one side of the crankshaft 210, to enable the outer surface of the first bearing 250 to abut against the shaft shoulder 211. Then, the outer ring 222 is sleeved onto the shaft shoulder 211. The first connection portion 2311 of the torque sensing sleeve 231 is inserted and fixed into the inner ring 221. Then, the second bearing 260 and the third bearing 270 are fixed in the second inner hole of the torque output member 240. Finally, one end of the torque output member 240 is sleeved onto and fixed to the second connection portion 2312 of the torque sensing sleeve 231. The second bearing 260 and the third bearing 270 are sleeved onto the crankshaft 210.

It should be noted that a sealing ring is disposed between the torque output member 240 and the crankshaft 210. The sealing ring is used to seal the second inner hole, preventing water, dust, and foreign objects from entering the second inner hole. Further, the torque output member 240 is provided with a fourth bearing at the outer wall of the torque output member 240. In the axial direction of the crankshaft 210, the first bearing 250 and the fourth bearing are located at two sides of the crankshaft 210, providing support. The first bearing 250 and the fourth bearing work together to enable rotational connection between the crankshaft 210 and the housing assembly 100. The fourth bearing is sleeved onto the torque output member 240, and the torque output member 240 is also provided with a positioning tab which is used to position the fourth bearing.

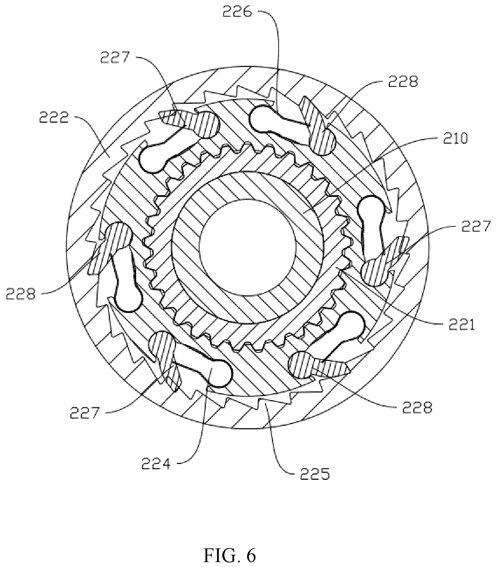

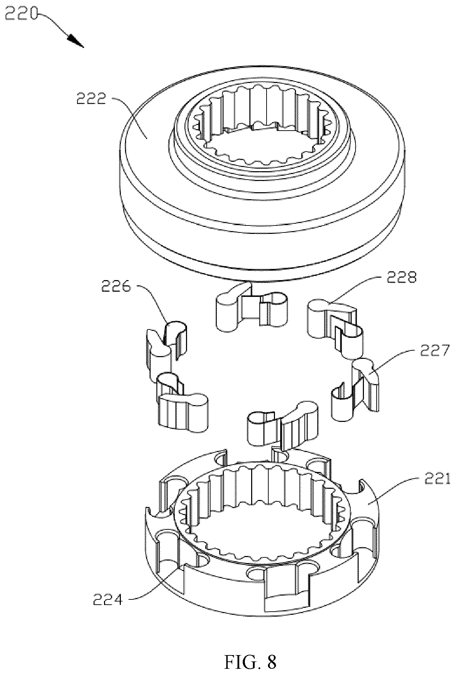

As illustrated in FIG. 6 to FIG. 8, it should be understood that a plurality of mounting grooves 224 are formed at an outer circumferential wall of the inner ring 221 and circumferentially arranged at intervals. The outer ring 222 is provided with a plurality of ratchet teeth 225 facing towards the inner ring 221. Each of the plurality of ratchet teeth 225 has an engagement surface. A pawl is disposed in each of the plurality of mounting grooves 224 and is rotatably connected to the inner ring 221. The pawl comprises a first pawl 227 and a second pawl 228. Each of the first pawl 227 and the second pawl 228 is connected to an elastic element 226. The elastic element 226 is configured to push the first pawl 227 and the second pawl 228 to expand outwardly. When the inner ring 221 rotates in a first direction, one of the first pawl 227 and the second pawl 228 abuts against the engagement surface, and a gap is formed between the other of the first pawl 227 and the second pawl 228 and the engagement surface. When the inner ring 221 rotates in a second direction, each of the first pawl 227 and the second pawl 228 is slidably connected to a corresponding one of the plurality of ratchet teeth 225. The elastic element 226 pushes the pawl to expand outwardly, enabling the first pawl 227 and the second pawl 228 to always abut against the tooth surface of the ratchet tooth 225. When the inner ring 221 rotates in the first direction, the first pawl 227 close to the ratchet tooth 225 abuts against the engagement surface and the second pawl 228 is separated from the engagement surface. In this case, the first pawl 227 is in an operation state. A force on the inner ring 221 is transmitted to the outer ring 222 through the first pawl 227. When the first pawl 227 fails, the inner ring 221 rotates to enable the second pawl 228 to abut against the engagement surface, in this case the second pawl 228 is in an operation state. A force on the inner ring 221 is then transmitted to the outer ring 222 through the second pawl 228, reducing a failure rate. When the inner ring 221 rotates in the second direction, both the first pawl 227 and the second pawl 228 slide along the tooth surface of the ratchet tooth 225. In this case, neither the first pawl 227 nor the second pawl 228 can transmit the force, and the force on the inner ring 221 cannot be transmitted to the outer ring 222, achieving a function of a one-way clutch.

It should be understood that when the inner ring 221 rotates from the second direction to the first direction, in this case one of the first pawl 227 and the second pawl 228 that is closer to the ratchet tooth 225 can abut against the engagement surface, and there is a gap between the other of the first pawl 227 and the second pawl 228 and the engagement surface, which can reduce a free travel distance of the first inner ring 221 to enable a force on the first inner ring 221 to be quickly transmitted to the outer ring 222, improving an operation efficiency of the one-way clutch.

It should be noted that when the first one-way clutch 220 is mounted to the mid-drive motor, the installer can adjust the first direction and the second direction of the first one-way clutch 220 to allow the first one-way clutch 220 to meet use requirements.

It should be understood that when the first pawl 227 abuts against the engagement surface, the second pawl 228 disengages from the engagement surface. When the second pawl 228 abuts against the engagement surface, the first pawl 227 disengages from the engagement surface. When the first pawl 227 fails, the second pawl 228 can still operate normally to reduce a failure rate.

As illustrated in FIG. 6 to FIG. 8, it should be understood that three first pawls 227 and three second pawls 228 are provided. The three first pawls 227 are alternatively arranged with the three second pawls 228 in the circumferential direction of the inner ring 221. When the first pawl 227 is in the operation state, the three first pawls 227 can act simultaneously to transmit a power to enable a uniform force between the first pawls 227 and the ratchet teeth 225, which makes it to be less likely to cause shake between the first pawls 227 and the ratchet teeth 225, improving stability of transmission. Similarly, when the second pawl 228 is in the operation state, the three second pawls 228 can also act simultaneously to transmit the power to improve the stability of transmission.

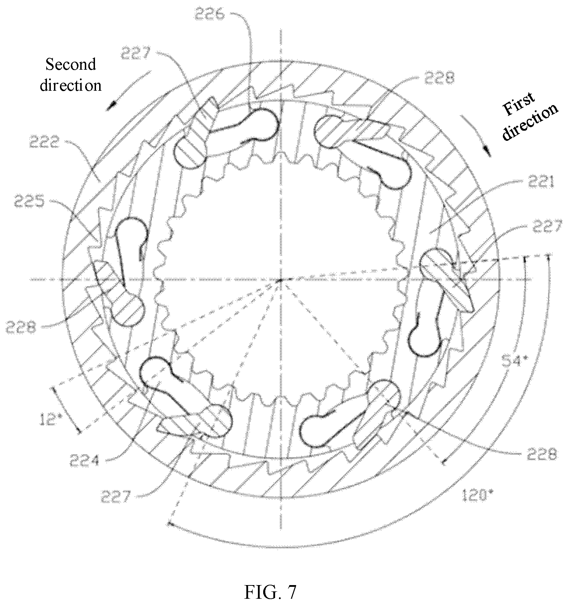

It should be understood that, as illustrated in FIG. 7, when the three first pawls 227 and the three second pawls 228 are provided, central angle of any two first pawls 227 and central angle of any two second pawls 228 are 120 degrees, and a central angle between the first pawl 227 and an adjacent second pawl 228 can range from 50 degrees to 70 degrees. For example, a central angle between the first pawl 227 and one adjacent second pawl 228 is 54 degrees, and a central angle between the first pawl 227 and the other adjacent second pawl 228 is 66 degrees. It should be noted that, as illustrated in FIG. 7, central angle of two adjacent first pawls 227 and central angle of two adjacent second pawls 228 are 120 degrees. That is, three first pawls 227 and three second pawls 228 are provided, and the three first pawls 227 and the three second pawls 228 are uniformly arranged in the circumferential direction of the inner ring 221. When the central angle between the second pawl 228 and one adjacent first pawl 227 is 54 degrees, the central angle between the second pawl 228 and the other adjacent first pawl 227 is 66 degrees. Further, as illustrated in FIG. 7, the central angle occupied by each ratchet tooth 225 is set as 12 degrees, and there are thirty ratchet teeth 225. During operation, both the first pawl 227 and the second pawl 228 abut against a tooth surface of the ratchet tooth 225 under an action of the elastic element 226. When the outer ring 222 rotates alone in the second direction by 6 degrees, the second pawl 228 abuts against the engagement surface, which means that the second pawl 228 switches to be in the operation state, while the first pawl 227 disengages from the engagement surface. That is, the first pawl 227 switches from the operation state to a non-operation state. This flexible allocation of operation modes between the first pawl 227 and the second pawl 228 ensures a reliable structure with a low failure rate.

It should be understood that four, five, or other numbers of first pawls 227 and second pawls 228 may be provided. The present disclosure is not limited in this regard. When the number of first pawls 227 and second pawls 228 changes, the central angle of two first pawls 227 and the central angle of two second pawls 228 also need to be modified accordingly, and details thereof will be omitted here.

It should be understood that the first pawl 227 and the second pawl 228 may have a same shape. The first pawl 227 and the second pawl 228 have the same shape and thus can be engaged with the ratchet teeth 225, respectively, to realize the transmission of the power. Further, when the first pawl 227 and the second pawl 228 have the same shape, it can facilitate production and manufacturing, and they can be produced by a same mold, which reduces a production cost, facilitates assembly and disassembly, and eliminates a need to be distinguished or classified during mounting, improving user experience.

As illustrated in FIG. 4 and FIG. 5, the torque detection component 230 further comprises a torque sensor 232 and a shielding cover 233. The shielding cover 233 is sleeved onto an outer periphery of the torque sensing sleeve 231. The torque sensor 232 is disposed between the torque sensing sleeve 231 and the shielding cover 233. During transmission, the torque sensing sleeve 231 rotates together with the crankshaft 210, and the torque sensor 232 can sense deformation of the torque sensing sleeve 231 to detect a torque on the torque sensing sleeve 231. The shielding cover 233 is arranged on an outer circumference of the torque sensor 232, and is configured to shield interference of external signals on the torque sensor 232 to ensure signal detection accuracy.

It should be understood that the torque sensor 232 comprises a strain gauge, a coil fixation base, an induction coil, and a signal processing circuit. The strain gauge is arranged on the torque sensing sleeve 231 and can reflect the deformation of the torque sensing sleeve 231. The coil fixation base is arranged on the outer periphery of the torque sensing sleeve 231. The induction coil is arranged on the coil fixation base and configured to sense signals from the strain gauge. The signal processing circuit is electrically connected to the induction coil and configured to process signals transmitted from the induction coil.

According to the mid-drive motor according to the embodiments in the first aspect of the present disclosure, the input end of the gear transmission mechanism 400 is connected to the drive shaft 310 of the motor 300, and the second one-way clutch 500 is connected to the output end of the gear transmission mechanism 400. During the operation of the mid-drive motor, the power output by the motor 300 is transmitted to the input end of the gear transmission mechanism 400 by the drive shaft 310, then to the output end of the gear transmission mechanism 400, and finally to the torque output member 240 by the second one-way clutch 500, resulting in stable and reliable power transmission.

It should be noted that the gear transmission mechanism 400 is a parallel-shaft reduction gear set which is arranged in parallel with the crankshaft 210 in the housing assembly 100. The gear transmission mechanism 400 may be a two-stage reduction gear set or a three-stage reduction gear set according to different speed ratio requirements.

An electric vehicle is provided according to an embodiment in the second aspect of the present disclosure. The electric vehicle comprises a frame, a wheel, a pedal crank, a pedal, a chain, a drive sprocket, and the mid-drive motor according to the embodiments in the first aspect of the present disclosure. The mid-drive motor is connected to the frame and connected to a rear wheel by the chain to transmit the power. Also, pedals are mounted at two sides of the mid-drive motor. In the absence of power to the mid-drive motor, the rider can pedal to achieve manual cycling, with no difference in resistance compared to a regular bicycle.

In a production process of the electric bicycle, it is necessary to mount the mid-drive motor as a whole first, and mount the mid-drive motor on the electric bicycle. During mounting of the mid-drive motor, the outer ring 222 of the first one-way clutch 220 is sleeved onto and fixed to the crankshaft 210, the first connection portion 2311 of the torque sensing sleeve 231 is inserted into and fixed to the inner ring 221, and then one end of the torque output member 240 is connected to the second connection portion 2312 of the torque sensing sleeve 231 to obtain the mounted crank transmission mechanism 200. The entire mounting process is simple and convenient. In addition, the torque input from the crankshaft 210 is transmitted through the first one-way clutch 220 to the torque sensing sleeve 231, and then to the torque output member 240. Connection and transmission relationships among the components of the crank transmission mechanism 200 are relatively stable. By mounting the crank transmission mechanism 200 into the first mounting cavity 150 at one end of the housing assembly 100, and by mounting the motor 300 and gear transmission mechanism 400 into the second mounting cavity 160 and the third mounting cavity 170 at two sides of the housing assembly 100, mounting of the entire mid-drive motor is completed. After assembly, the motor 300 and the first one-way clutch 220 of the mid-drive motor are located at one side of the housing assembly 100, while the gear transmission mechanism 400 and the torque output member 240 are located at another side of the housing assembly 100 opposite to the one side of the housing assembly 100. The crank transmission mechanism 200, the motor 300, and the gear transmission mechanism 400 are rationally distributed in different positions in the housing assembly 100, which simplifies the internal structure and mounting of the mid-drive motor, greatly reducing the time cost and the labor cost involved during assembly. In addition, during later repair and maintenance of the mid-drive motor, opening the first mounting cavity 150 allows for removal of the crank transmission mechanism 200 for repair and maintenance, opening the second mounting cavity 160 allows for removal of the motor 300 for repair and maintenance, and opening the third mounting cavity 170 allows for removal of the gear transmission mechanism 400 for repair and maintenance. Each component in the gear transmission mechanism 400 can be disassembled conveniently and quickly, facilitating the later repair and maintenance for the mid-drive motor.

It should be understood that the electric vehicle may be an electric bicycle, an electric moped, an electric assisted tricycle, or the like.

Although embodiments of the present disclosure have been described in detail with reference to the accompanying drawings, the present disclosure is not limited to the above-described embodiments, and various changes can be made without departing from the spirit of the present disclosure within the scope of knowledge possessed by those skilled in the art.

## Claims

1. A mid-drive motor, comprising:
a housing assembly having a first mounting cavity, a second mounting cavity, and a third mounting cavity;
a crank transmission mechanism comprising a crankshaft, a first one-way clutch, a torque detection component, and a torque output member, the crankshaft being rotatably connected to the housing assembly, the first one-way clutch comprising an outer ring and an inner ring, the outer ring being sleeved onto and fixed to the crankshaft, the torque detection component comprising a torque sensing sleeve, the torque sensing sleeve being provided with a first connection portion and a second connection portion at two ends of the torque sensing sleeve, the first connection portion being connected to the inner ring, and the torque output member having an end sleeved onto and connected to the second connection portion;
a motor connected to the housing assembly;
a gear transmission mechanism connected to the housing assembly, the gear transmission mechanism having an output end and an input end, and the input end being connected to a drive shaft of the motor; and
a second one-way clutch connecting the output end and the torque output member, wherein:
the first mounting cavity is located at an end of the housing assembly, the second mounting cavity and the third mounting cavity are located at another end of the housing assembly in a radial direction of the crankshaft;
the crank transmission mechanism is located in the first mounting cavity, and the crankshaft passes through the first mounting cavity;
the second mounting cavity and the third mounting cavity are located at two sides of the housing assembly in an axial direction of the crankshaft; and
the motor is located in the second mounting cavity, and the gear transmission mechanism is located in the third mounting cavity.

2. The mid-drive motor according to claim 1, wherein the housing assembly comprises a first housing, a second housing, a first end cover, and a second end cover, the first housing being connected to the second housing to form the first mounting cavity, the first housing being connected to the first end cover to form the second mounting cavity, and the second housing being connected to the second end cover to form the third mounting cavity.

3. The mid-drive motor according to claim 1 or 2, wherein:
the crankshaft has a shaft shoulder at a side of the crankshaft; and
a first bearing is sleeved onto the crankshaft, the first bearing being connected to the housing assembly, the first bearing abutting against an outer sidewall of the shaft shoulder in an axial direction of the crankshaft, and the outer ring being sleeved onto the shaft shoulder and having an end surface abutting against the first bearing.

4. The mid-drive motor according to claim 3, wherein the crankshaft has a first engagement groove formed at an outer wall of the crankshaft, the first engagement groove and the shaft shoulder being located at two sides of the first bearing, and a first circlip being disposed in the first engagement groove to limit the first bearing.

5. The mid-drive motor according to any one of claims 1 to 4, wherein:
the inner ring has a first inner hole, wherein in an axial direction of the inner ring, a plurality of first guide grooves are formed at an inner wall of the first inner hole and circumferentially arranged at an interval; and
a first guide bar corresponding to the plurality of first guide groove is arranged at an outer wall of the first connection portion, the first guide bar is inserted in the first guide groove.

6. The mid-drive motor according to claim 5, wherein a first washer is disposed between the outer ring and the first connection portion, wherein the first connection portion abuts against the first washer when the first guide bar is inserted in the first guide groove.

7. The mid-drive motor according to claim 5 or 6, wherein:
the torque output member has a second inner hole, wherein in an axial direction of the torque output member, a plurality of second guide grooves are formed at an inner wall of the second inner hole and circumferentially arranged at an interval; and
a second guide bar corresponding to the plurality of second guide grooves is arranged at an outer wall of the second connection portion, wherein the second guide bar is inserted in the second guide groove.

8. The mid-drive motor according to claim 7, wherein in the axial direction of the crankshaft, a second bearing and a third bearing are disposed between the torque output member and the crankshaft and spaced apart from each other, the second bearing and the third bearing being located in the second inner hole.

9. The mid-drive motor according to any one of claims 1 to 8, wherein:
a plurality of mounting grooves are formed at an outer circumferential wall of the inner ring and circumferentially arranged at an interval, the outer ring being provided with a plurality of ratchet teeth facing towards the inner ring, the plurality of ratchet teeth having an engagement surface; and
a pawl being disposed in the plurality of mounting grooves and being rotatably connected to the inner ring, the pawl comprising a first pawl and a second pawl, each of the first pawl and the second pawl being connected to an elastic element, and the elastic element being configured to push the first pawl and the second pawl to expand outwardly, wherein:
when the inner ring rotates in a first direction, one of the first pawl and the second pawl abuts against the engagement surface, and a gap is formed between the other of the first pawl and the second pawl and the engagement surface; and
when the inner ring rotates in a second direction, each of the first pawl and the second pawl is slidably connected to ratchet teeth.

10. The mid-drive motor according to claim 9, wherein three first pawls and three second pawls are provided, the three first pawls being alternatively arranged with the three second pawls in a circumferential direction of the inner ring.

11. The mid-drive motor according to any one of claims 1 to 10, wherein the torque detection component further comprises a torque sensor and a shielding cover, the shielding cover being sleeved onto an outer periphery of the torque sensing sleeve, and the torque sensor being disposed between the torque sensing sleeve and the shielding cover.

12. An electric vehicle, comprising a mid-drive motor according to any one of claims 1 to 11.
